# EUROPEAN PATENT APPLICATION

(11) **EP 2 273 773 A2**
(43) Date of publication of application: **12.01.2011**
(21) Application number: 10166802.8
(22) Date of filing: 22.06.2010
(51) Int. Cl.: H04M 1/66, G06F 21/00

(54) **Combination lock**

(30) Priority: 22.06.2009 DK 200900763
(71) Applicant: Excellent Systems A/S, 8544 Morke (DK)
(72) Inventor: Frederiksen, Ole, 8543 Hornslet (DK)
(74) Representative: Tellefsen, Jens J.

(57) **Abstract**

The invention provides a mobile security unit for digital storage of personal codes, **characterised in that** the mobile security unit includes an electronic communication unit, a separate register unit, means for activating the contents of the separate register unit, means for reading the contents of the separate register unit and means for changing the contents of the separate register unit.

## Description

### Field of the Invention

The present invention relates to a security unit for storing personal codes.

### Background of the Invention

Storage of PIN codes and passwords is a growing problem. In daily life, many people are to remember between 20 and 30 different codes, of which some of the codes are only used a few times over the year. Rarely used codes particularly tend to be forgotten from time to time. Therefore, many people decide to use only one or maybe two different codes for their different systems, such as for example credit card, home banking, email, e-box, fuel card etc. However, this has great consequences for the safety as discovery of one code will give access to more of the user's protected data.

Over time, different methods have therefore been provided for remembering the different codes, i.a. small cards encrypted in a way which the user may easily remember, and which may easily be carried in the purse or wallet. However, this means that the easily remembered encryption makes it easy for others to decrypt this code. Moreover, for the user it means that he is again to remember a code for finding another code.

Alternatively, there have been options of making a password list and enter it in on e.g. protected drives on the computer. However, this is not a defensible system either as in order to find the password, one will need to look it up on the local system. In practice, this means that if one has forgotten the code when using a debit card, it is not possible to find it momentarily, but it will be necessary to get access to a computer communicating with the protected network.

In order to carry your codes where you are, it will often be logical to enter these codes on units that are carried, such as e.g. a mobile phone. However, due to the communication of the mobile phones with the surroundings, it will be possible to hack the telephone and find the given passwords.

Today, more mobile phones include possibility of extra storage of information or insertion of a card with additional memory. As described in US 2004/0180694, there are furthermore systems by which it is possible via the telephone to encrypt or decrypt the given information on inserted additional memories. This patent document describes how the information on the inserted additional memory will depend on the mobile phone in order to encrypt and decrypt the information. However, it will still be possible to hack the phone and get the encrypted/decrypted information.

### Object of the Invention

The object of this invention is to provide a security unit for storing personal codes and passwords to which only an authorised user may get access.

### Description of the Invention

Such an object of the invention is achieved by providing a mobile security unit for digital storage of personal codes, **characterised in that** the mobile security unit includes an electronic communication unit, a separate register unit, means for activating the contents of the separate register unit, means for reading the contents of the separate register unit and means for changing the contents of the separate register unit.

It will be a great advantage to have the secured unit on oneself in a mobile way, such that it is possible to get access to one's personal codes (passwords and PIN codes), irrespectively of where you are. An alternative embodiment will be that the mobile security unit consists of two separate parts. The common electronic communication unit may e.g. be a mobile phone, a minicomputer or a PDA, and a separate register unit on which the personal codes may be entered. In such cases, the separate register unit will be without communication with the communication unit, except that they are transported together. It may be envisaged that the separate register unit is powered by a separate battery and coupled to a screen or similar separate from the communication unit whereby the contents of the register unit may be read.

Moreover, in order to activate the separate register unit there has to be means for activation. This may e.g. be through reading of fingerprints, via a mechanism for scanning an eye, recognition of a whistled melody or possibly by entering a simple PIN code. By this is furthermore understood a possibility of finding the wanted information from the separate register unit. It may i.a. be by means of a touch-screen whereby choices can be performed, or by means of voice control where look-up may be done in the separate register unit by using verbal commands.

In addition, there is to be a possibility of inserting, editing and deleting personal codes from the register unit such that one may have an updated register unit all the time, without too many or too few personal codes. The means for changing the contents of the separate register unit may e.g. be in the form of a keyboard or a microphone combined with the possibility of converting sound to digital information.

According to a further embodiment of the mobile security unit for storing personal codes, the separate register unit is an integrated part of the electronic communication unit.

It will be particularly advantageous if the separate register unit is an integrated part of the electronic communication unit. The only requirement here is that the separate unit will be without communication and/or signal connection to the communication unit. The reading means, such as a screen, may be the same otherwise used on the communication unit, in case it is still possible to avoid the communication between the separate register unit and the communication unit. But it will also be possible to have two separate screens, i.e. one for the communication unit and one for the separate register unit.

Moreover, the means for activating the separate register unit will be separate from the communication unit in order to avoid communication between them. In case it is still possible to avoid communication between the separate register unit and the communication unit, means for activating the contents of the separate register unit, means for reading the contents of the separate register unit and means for changing the contents of the separate register unit will coincide with those on the communication unit.

It may also be envisaged that the separate register unit may be a card which can be taken out of and inserted in the communication unit. In that way one will have the possibility of changing the memory on the register unit without the communication unit itself having to be connected to e.g. a computer.

According to a further embodiment of the mobile security unit for storing personal codes, the separate register unit is an external unit and possibly a dedicated external unit.

Another advantageous embodiment will be to couple the communication unit with a cable to e.g. a keyboard. A cable connection is to prefer for security reasons, but it will also be possible to use a secure wireless connection. The wireless connection has to be short-distance in order to operate securely.

In an alternative embodiment, a synchronisation between the keyboard and the separate register unit will be advantageous such that the separate register unit will only recognise the keyboard in question. In that way, only the keyboard in question may be used for changing the contents of the separate register unit. Hereby it is avoided that people who possibly get hold of the communication unit will be able to get access to one's personal codes through a given keyboard.

According to a further embodiment, the mobile security unit, for storing personal codes, includes a further signal transmitter which is capable of transmitting information to a signal receiver. According to a further embodiment, the means for activating the separate register unit is constituted by the signal transmitter.

It will be very advantageous if the mobile communication unit includes a signal transmitter which may communicate with a signal receiver in a given unit. The connection between signal transmitter and signal receiver may advantageously be a touch-on connection such that communication cannot be intercepted between signal transmitter and signal receiver. However, it may be envisaged that short distances with secure encryption may be possible.

In this way, one may automatically and easily unlock e.g. one's house or car by activating the separate register unit and hold the signal transmitter towards a signal transmitter on the car or the house. As a further safety precaution, it will be possible to encrypt the messages and transmit the messages in encrypted form between the signal transmitter and the signal receiver. Hereby, electronic signals transmitted from the signal transmitter can not immediately be read if intercepted by other than the signal receiver. Moreover, in the signal receiver and the signal transmitter there will be a given signalling such that the personal code, which is actual for the given signal receiver, will automatically be found.

Also, in connection with debit cards containing a chip, it may be envisaged that this chip can communicate with the signal transmitter by touch-on between the chip and the transmitter such that the code for exactly this card is found. In this way one will automatically get the PIN code for the given debit card. It has great advantages because one will avoid messing with the mobile security unit in order to find the right code, making it easier for others to read the result on the way.

Alternatively, a payment receiver may be coupled together with a signal receiver. This means that after performing communication between the correct card and the signal transmitter on the mobile security unit, the signal transmitter may communicate the correct PIN code directly to the payment receiver, e.g. via touch-on. A keying operation and the risk of other persons' finding out may hereby be avoided. Alternatively, it may be envisaged that activation of the separate register unit is effected through communication between a personal card and the signal transmitter.

In a similar way it will not be possible to receive signals from the payment receiver to the mobile security unit such that signals are transmitted from the signal receiver to the signal transmitter, and not just reversely. In that way, it will be possible e.g. to receive information about the balance on one's bank account or other personal information.

According to a further embodiment, the communication unit is constituted by a mobile phone.

By using a mobile phone, it will be possible to provide for the greater part of the persons which are in need of using many different personal codes. It will therefore be an easy way to reach by far the most users. Furthermore, the mobile phone will be a tool which most people will carry, both on work and in leisure, whereas tools like a PDA and a minicomputer are more often regarded as work tools. Besides, PDA's and minicomputers are not so common occurrences. Of course, it will be particularly advantageous to combine the given means for using the register unit and the register unit in the mobile phone such that it will be possible just to add one key extra to the mobile phone enabling access to the separate register unit.

The invention furthermore concerns a method for preventing unauthorised use of personal codes by means of a mobile security unit, where the personal codes are stored in a separate register in a mobile security unit containing an electronic communication unit and a separate register unit wherein the personal codes can be inserted and changed by means for changing the contents of the separate register unit, whereby the personal codes can be read by means for reading the contents of the separate register unit after correct registration having been performed by means for activating the contents of the separate register unit.

By using this method, it may be envisaged first to couple one's mobile security unit to a keyboard by means of a cable, after which the desired personal codes are added to the separate register, followed by shutting off the communication unit.

In use, one activates the means for activation in order to get access to the contents of the separate register unit, which e.g. may be by pressing the finger against a button on the front of the communication unit. Then access will be created to the separate register unit after which it will be possible to read the wanted personal code. It may possibly be envisaged that one may choose the desired code by touching the display screen. In that way it may also be possible to divide many personal codes into categories.

After using and finding one's personal code, the register may be deactivated again by touching the means for activation. Alternatively, it may be envisaged that the separate register unit may only be activated in a given short period of time, after which it will be automatically deactivated and remain locked. It may be advantageous such that one does not forget to deactivate the register unit, whereby it may be ensured that others are not readily provided access in case that deactivation has been forgotten.

The invention furthermore concerns a method for preventing unauthorised use of personal codes where the means for reading the separate register unit is blocked by lack of recognition by attempts to activate the means for activating the separate register unit. The invention furthermore concerns a method for preventing unauthorised use of personal codes, wherein the means for reading the separate register unit is only unlocked by correct activation of the means for activating the separate register unit combined with correct activation of the means for changing the contents of the separate register unit.

In order to achieve additional protection of personal codes, it will be of great advantage if attempts of getting access to the separate register unit without authorisation will cause locking of the access to the register unit. For particularly critical instances it may be envisaged that the separate register unit includes the option of self-destruction if somebody tries to get unauthorised access to it.

If the access to the separate register unit has been locked, in order to be unlocked it must be activated by combining the authorised activation of the means for activating the separate register units, such as e.g. a correct fingerprint simultaneously with connecting a synchronised keyboard (dedicated unit) of a type which also can be used for changing the contents of the separate register unit.

The invention also includes use of a mobile security unit for storing personal codes, where the mobile security unit can be used for burglar alarms, electronic signatures, locking one or more houses, or locking one or more cars, respectively.

The mobile security unit can be used e.g. for storing PIN codes for debit cards and/or passwords for different websites, such as for home banking. The mobile security unit may also be used for storing one's digital signature.

Moreover, the mobile security unit may replace keys otherwise used for providing access to house or car. In that way, one avoids problems if a key is lost or if you are carrying the wrong keys. In many cases, people will carry e.g. their mobile phones and at the same time taking more care of such.

### Description of the Drawing

Fig. 1 illustrates a mobile security unit coupled to a keyboard via a cable; and
Fig. 2 illustrates a flowchart for using the mobile security unit.

### Detailed Description of the Invention

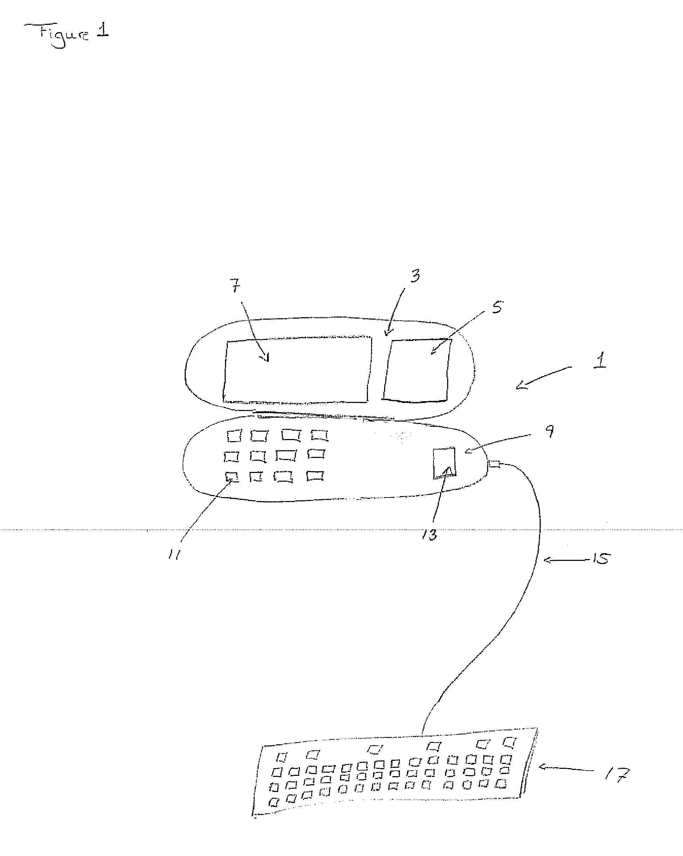

Fig. 1 illustrates a mobile security unit in the form of a mobile phone 1 where the separate register unit is integrated in the telephone and therefore not visible. In this embodiment is seen that the mobile phone is collapsible, and that two screens 5, 7 appear at the inner side of the upper part 3. A screen 7 is provided for displaying information as usual for mobile phones, this being images, text messages, phone numbers etc., and a second screen 5 for displaying the contents of the separate register unit.

The inner side of the lower part 9 of the mobile phone 1 contains keys 11 as usual on a mobile phone 1 and an additional area with means for activating the separate register unit 13. In this case there may e.g. be an area for recognising fingerprints. It may be envisaged that just one fingerprint is not a sufficient access signal, but that a combination of more fingerprints in a given sequence will be required.

The mobile phone 1 is connected via a cable 15 to a common keyboard 17. This keyboard 17 may e.g. be synchronised with the separate register unit. By means of this synchronisation, it will be possible for the keyboard 17 to communicate with the separate register unit. It is now possible to enter the password list by the keyboard for use in later look-ups.

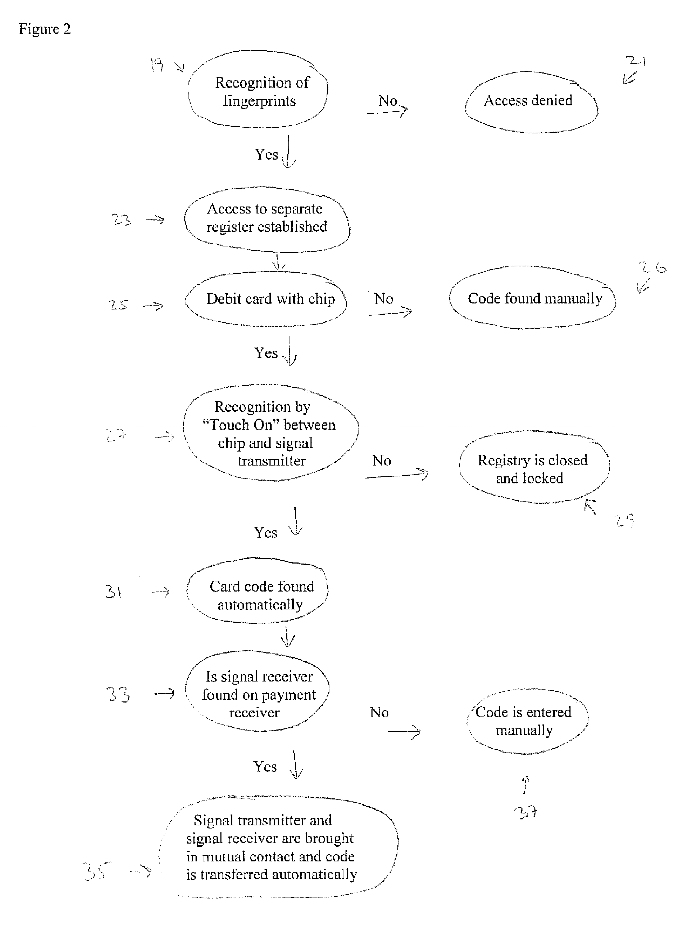

In Fig. 2 is illustrated how the communication for use of the separate register unit occurs when wanting to find a PIN code for a debit card.

Firstly, recognition of the fingerprints 19 is to be performed on the mobile security unit. If this fingerprint, or the combination of several fingerprints, is not recognised, access to the system 21 will be denied. However, if the sequence and the fingerprints are recognised, one will get access to the separate register 23.

If desiring to pay with a debit card with chip 25, one may hold the selected card in front of a signal transmitter on the communication unit 27. If no recognition occurs between the chip and the signal transmitter, the register will automatically close down and be locked 29, since it may be an unfamiliar and unknown card. If recognition occurs between the chip and the signal transmitter, the card code will automatically be found 31.

If the debit card does not contain a chip 25, the wanted PIN code is found manually by looking it up in the separate register unit and finding the wanted card 26 via selection on the screen (by pressing the screen). The look-up may possibly occur by voice control, meaning that one asks for "Dankort", whereby the separate register unit will automatically find the PIN code of the former.

Moreover, it may be envisaged that if the payment receiver, in case that it is desired to pay with the given debit card, contains a signal receiver 33, this will automatically be registered by the separate register unit, and the desired code may automatically be transmitted to the signal receiver in encrypted form by means of a touch-on mechanism when the appropriate debit card is inserted in the payment terminal 35. Hereby, the given PIN code does need to become visible. This means either that the name of the debit card, for example, appears, that the screen remains blank, or that it will not be required with a screen in this instance, respectively.

If the payment receiver does not contain a signal receiver 33, the PIN code is entered on the basis of the code provided by the separate register unit when the correct debit card is inserted in the payment terminal 37.

## Claims

1. A mobile security unit for digital storage of personal codes, **characterised in that** the mobile security unit includes:
- an electronic communication unit;
- a separate register unit;
- means for activating the contents of the separate register unit;
- means for reading the contents of the separate register unit; and
- means for changing the contents of the separate register unit.

2. A mobile security unit for storage of personal codes according to claim 1, **characterised in that** the separate register unit is an integrated part of the electronic communication unit.

3. A mobile security unit for storage of personal codes according to claim 1 or 2, **characterised in that** the means for changing the contents of the separate register unit is an external unit and possibly a dedicated external unit.

4. A mobile security unit for storage of personal codes according to any of claims 1-3, **characterised in that** the mobile security unit furthermore includes a signal transmitter, the signal transmitter capable of transmitting information to a signal receiver.

5. A mobile security unit for storage of personal codes according to claim 4, **characterised in that** the means for activating the separate register unit is constituted by the signal transmitter.

6. A mobile security unit for digital storage of personal codes according to any preceding claim, **characterised in that** the communication unit is constituted by a mobile telephone.

7. A method for preventing unauthorised use of personal codes by means of a mobile security unit according to any preceding claim, **characterised in that** personal codes are stored in a separate register in a mobile security unit containing:
- an electronic communication unit;
- a separate register unit;
wherein the personal codes can be inserted and changed by means for changing the contents of the separate register unit, whereby the personal codes can be read by means for reading the contents of the separate register unit after correct registration having been performed by means for activating the contents of the separate register unit.

8. A method for preventing unauthorised use of personal codes according to claim 7, **characterised in that** the means for reading the separate register unit is blocked by lack of recognition by attempts of activating the means for activating the separate register unit.

9. A method for preventing unauthorised use of personal codes according to claim 8, **characterised in that** the means for reading the separate register unit is only unlocked by correct activation of the means for activating the separate register unit combined with correct activation of the means for changing the contents of the separate register unit.

10. Use of a mobile security unit for storing personal codes according to any preceding claim, **characterised in that** the mobile security unit can be used for burglar alarms, electronic signatures, locking one or more houses, or locking one or more cars.
